# EUROPEAN PATENT SPECIFICATION

(11) **EP 0 453 493 B1**
(45) Date of publication and mention of the grant of the patent: **22.09.1993**
(21) Application number: 90902229.5
(22) Date of filing: 15.01.1990
(51) Int. Cl.: A61C 5/02, A61M 5/178

(54) **SYRINGE FOR WASHING TEETH ROOT CANALS**
SPRITZE ZUM WASCHEN VON ZAHNWURZELKANÄLEN
SERINGUE POUR LE LAVAGE DE CANAUX DE RACINES DE DENTS

(30) Priority: 16.01.1989 IT 5260189
(43) Date of publication of application: 30.10.1991
(73) Proprietor: Guerci, Sergio, I-05100 Terni (IT)
(72) Inventor: Guerci, Sergio, I-05100 Terni (IT)
(74) Representative: Marietti, Giuseppe
(86) International application number: EP9000077
(87) International publication number: WO9007911

(56) References cited:
- US-A- 4 109 653
- US-A- 4 381 778

## Description

The present invention refers to a syringe to be used in endodontia, namely that branch of odontology concerned with the treatment of teeth root canals.

In the endodontic field, normal syringes for injections or considerably complicated electromechanical devices are currently used to wash the root canals of the teeth.

Considering that, for an effective washing of teeth root canals, it is usually necessary to use two liquids, in particular hydrogen peroxide and sodium hypochlorite, injected one after the other, it is immediately obvious that the instruments used up to now are quite insufficient, mainly from a practical viewpoint, in that they must be filled in sequence with said two different liquids with resulting considerable loss of time.

In US-A-4109653 and US-A-4381778, both in the name of Kozam at al. (nearest state of the art), single needle multiple barrels syringes are disclosed.

According to these documents the two barrels are subsequently loaded with different fluid through the common needle. This results in a cumbersome syringe, difficult to use. Moreover, once one barrel is empty, the syringe must be removed from the patient's mouth in order to load again the barrel.

The aim of the present innovation is to provide a syringe for washing the root canals of the teeth comprising such a structure as to allow the automatic filling of the reservoir of the syringe itself with the first and the second of said two liquids successively, thus making the required dental operation easy and quick.

The solution is defined in claim 1.

The present invention will be better disclosed by the description of an example of a possible embodiment with reference to the accompanying drawings, where:
figure 1 is a vertical view of the syringe in question;

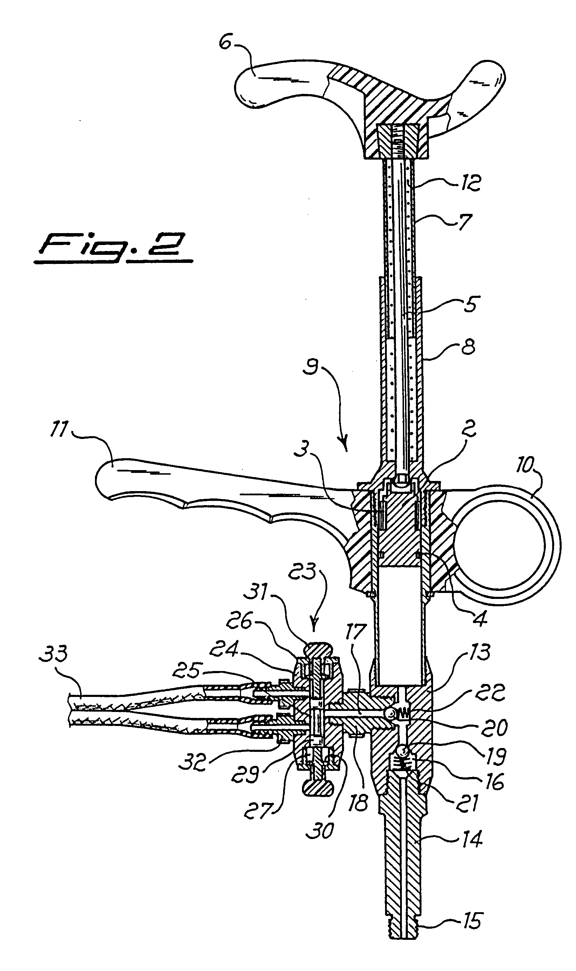

figure 2 is a longitudinal section of the syringe of figure 1;
figure 3 is a section view of the switching valve of the syringe of figure 1; and
figure 4 is a sectional view of an alternative embodiment of the switching valve.

With reference to the abovementioned figures, 1 refers to the syringe reservoir for the liquid to be injected consisting of a cylindrical tubular body, and 2 refers to a piston provided with a guide ring 3 made of self-lubricating material having low friction coefficient, for instance teflon, tightly slidable inside the reservoir 1 thanks to a ring seal 4.

The upper part of piston 2 is articulated to the end of a stem 5 having the other end integral to a saddle-shaped operating handgrip.

The upper portion of the stem 5 is concentrically housed in a cylindrical tubular sheath 7 slidable inside a cylindrical tubular guide 8, the lower end of which is fixed, for example by screw coupling, to the top of the reservoir 1.

The central body of a handle, generally referred to with 9, is integral to the external surface of the upper portion of the reservoir 1, said central body comprising, on one side, a ring 10 for housing a thumb and, on the opposite side, an elongated element 11 with its lower side shaped in such a way as to accomodate the other fingers of the hand.

Inside sheath 7 and guide 8, a helicoidal spring 12 is housed surrounding the stem 5, one end of said spring is abutted against the bottom of the guide 8 while the opposite end is abutted against the base portion of the operating handgrip 6, said spring 12 being in the rest position when the stem 5 and relevant piston 2 are in the completely uplifted position.

To the lower end portion of reservoir 1 there is fixed, for example by screw coupling, the upper end of a two-way valve body 13, to the lower end of which is fixed, e.g. by screw coupling, an extension element 14, substantially cylindrical, axially bored, on the free end of which there is provided a connection 15, for example of the so-called american type, for fixing the needle (not shown).

The valve body 13 has a first longitudinal duct 16 coaxial to and in communication with the reservoir 1 and with said axial hole in the extension element 14, and a second transversal duct 17, perpendicular to the first one and in communication therewith, axially machined in a side duct fitting 18 fixed to the valve body 13, for instance by screw coupling.

Valve seats are respectively provided at the end of the first duct 16 connected with said axial hole in the extension element 14 and at the end of the second duct 17 connected with the first duct 16. These valve seats are equipped with seals, against which the relevant ball obturators 19 and 20 are constantly urged by helicoidal springs 21 and 22 respectively, so as to intercept any flow through said ducts, when the invention device is in its non operative state.

Secured to the side of the fitting 18 opposite to that associated to the valve body 13, for instance by screw coupling, there is a switching valve, generally referred to with 23.

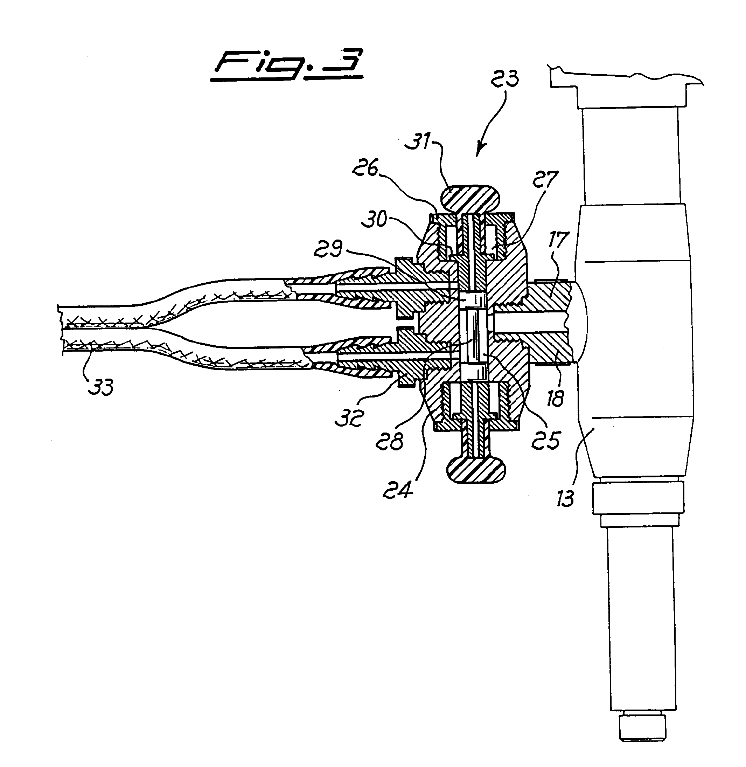

The switching valve 23, as better shown in figure 3, comprises a valve body 24 wherein an axial duct 25 is formed, connected with the transversal duct 17 in the two-way valve body 23, on each end of which there is provided a internally threaded cylindrical housing where a relevant threaded nut is screwed, presenting a central hole coaxial and in communication with an enlarged cylindrical cavity 27 which, on its turn, is coaxial to and connected with the axial duct 25 in the valve body 24. In said axial duct 25 and in the cavities 27 of the nuts 26 there is a slide obturator 28 consisting of an intermediate rod-shaped portion the ends of which are in a single piece with relevant enlarged cylindrical terminal portions having substantially the same diameter as that of the axial duct 25, the tight sliding movement of said terminal portions in the hole 25 being secured by relevant ring seals 29.

Each of said enlarged terminal portions of the box obturator 28 is secured to an end flange 30 and to the stem of a push-button 31 capable of sliding in a guided way in said central hole within the relevant nut 26.

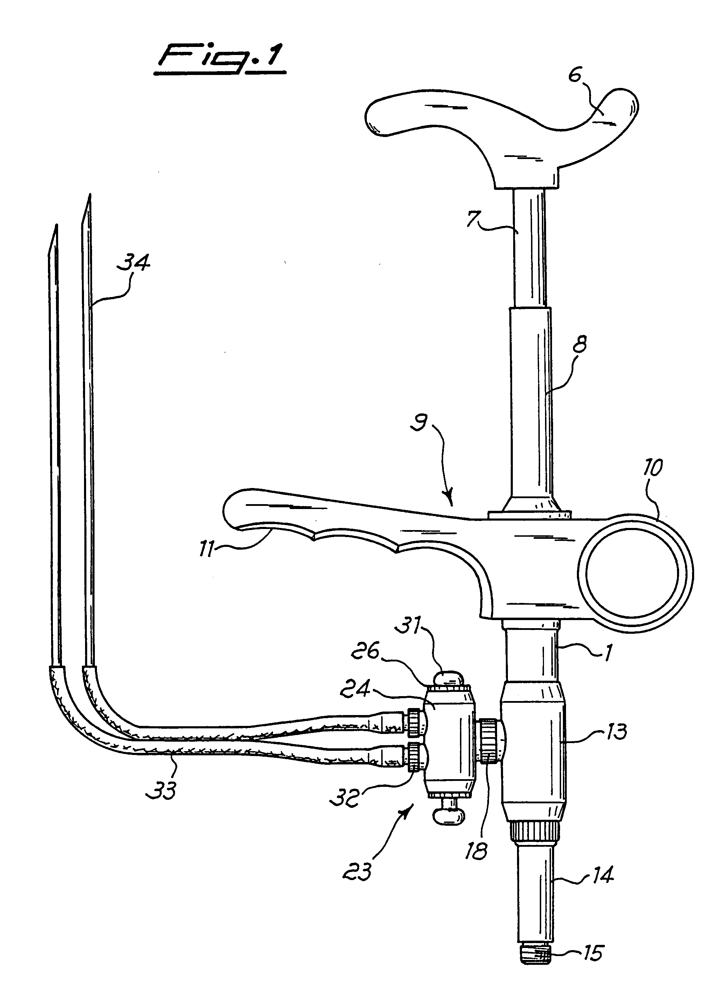

In relevant cavities provided on the side of the valve body 24 opposite to that connected to the fitting 28 there are secured, for instance by screw coupling, two fittings for tubes, provided with relevant axial holes in communication with the axial duct 25 in the body 24 of the switching valve 23 each of which is connected to an end of a relevant flexible tube 33, the other end of said tube being connected to a relevant drawing tube 34 (see figure 1) coming from an appropriate container (not shown) for one of the relevant two liquids to be used in the dental operation.

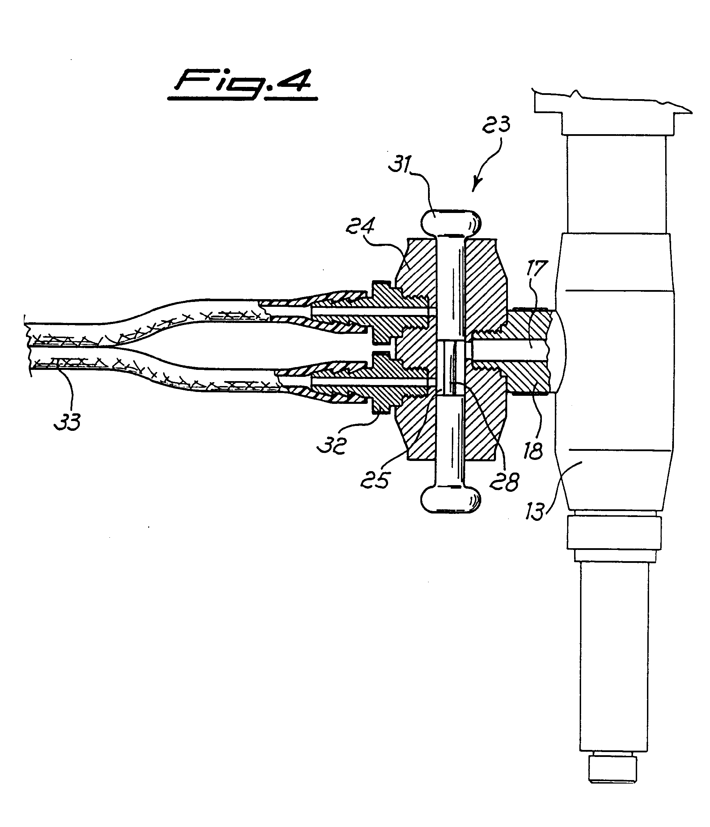

In fig. 4 is disclosed an alternative and simpler embodiment of the switching valve, where slide obturator enlarged terminal portions and push buttons are integral. During operation, after grasping by one hand the syringe according to the present invention by the handgrip 9, a pushing action is developed on the handle 6 in such a way as to allow the piston 2 to slide downwards in the reservoir 1 thanks to similar sliding movement of the stem 5 and relevant sheath 7 of the guide 8, with subsequent compression of the spring 12. When releasing the handle 6, the spring 12 stress relieving will bring the stem 5 and relevant piston 2 upwards thus creating a sucking force within the reservoir 1 causing the removal of the ball 20 from its seat, against the action of the spring 22, thus allowing a communication between the axial duct 25 in the body 24 of the switching valve 23 and the longitudinal duct 16 through the transversal duct 17 in the two-way valve 13 body.

In order to select the liquid to be used, the slide obturator 28 of the switching valve 23 is previously allowed to slide in the axial duct 25 as far as to bring one of the enlarged terminal portions to the intercepting position of the axial bore of the corresponding fitting for tubes 32, position determined by the counterboring of the relevant flange 30 on the annular shoulder created between the bottom of the cavity 27 and the corresponding end of the axial duct 25, connected through the relevant flexible tube 33 and the tube 34 to the container containing the liquid which has not to be drawn, said displacement of the box obturator 28 determining as a consequence the removal of the other enlarged terminal portion from the axial hole closing position of the corresponding fitting for tubes 32 so as to allow it to be connected, through the portion of the axial duct 25 of the switching valve 23 where there is said intermediate rod-shaped portion of the box obturator 28, the transversal duct 17 in the fitting 18 and the longitudinal duct 16 - which, as previously mentioned, are connected due to the removal of the ball obturator 22 from its closing position - with the inside of the reservoir 1 where, thanks to said sucking force generated in it, the first liquid will be drawn from the relevant container through the relevant tube 34 and the flexible tube 33.

A subsequent downward movement of the piston 2, according to the above described procedure, will create inside the reservoir 1 a compression of said liquid which determines the shut down of the ball valve 20, and therefore of the transversal duct 17 and simultaneously the opening of the communication between the longitudinal duct 16 and the axial bore in the extension element 14 following to the removal of the ball obturator 19 from its seat, against the action of the spring 21, so as to allow the ejection of said first liquid through the needle (not shown) secured to the connection 15 on the free end of the extension element 14.

Once the reservoir 1 is emptied from said first liquid the slide obturator 23 is moved, acting on the other push-button 31, to the intercepting position of the axial bore of the fitting 32 connected through the relevant flexible tube 33 and tube 34 with the container of said first liquid, thus connecting the reservoir 1 according to the same above described procedure, with the container of the second liquid in order to allow the filling of the reservoir 1 with said second liquid upon releasing of the handle 6, which will allow the spring 12 to bring the stem 5 and relevant piston 2 again to the upper starting position with subsequent generation of a resulting sucking force in the reservoir 1.

The subsequent sliding downward movement of the piston 2 by pushing, as already said, the handle 6 will allow the ejection of the second liquid through the needle as previously described.

From what said above it is immediately obvious how practical and surprisingly functional is the syringe of the innovation with automatic filling, such as to substantially improve the whole endodontic operation, because the operator has not to perform successive manual fillings of the syringe and because processing time is shortened, as well as because the handling of the syringe itself and the visibility in the mouth are made easier by adopting said extension element 14.

The present invention is not limited to the described embodiment, but it comprises any other possible variants in the configuration.

## Claims

1. A syringe for washing teeth root canals comprising: a reservoir (1) for containing a liquid to be injected; a piston (2) capable of tightly sliding inside said reservoir; a stem (5) having an end connected to said piston while the opposite end is fixed to operating handle (6); a tubular sheath (7), its upper end being connected to said operating handle, in which the upper portion of said stem is concentrically housed; a tubular guide (8), the lower end of which is secured to the upper end of said reservoir, to slidingly guide said stem (5) and said tubular sheath (7); helical spring (12) to upward urge said stem (5) to have said piston (2) return from the lower position to the uplifted position inside said reservoir (1); two-way valve body (13) connected to the bottom of said reservoir, in the body of which there is provided a longitudinal duct (16), the upper end of which is in communication with said reservoir (1) and the lower end of which is provided with a first obturator (19) constantly urged in the closing position by means of first spring means (21), and a transversal duct (17), having an end coming out in said longitudinal duct (16) provided with a second obturator (20) constantly urged in the closing position by means of second spring means (22); an extension element (14), extending from the lower end of said two-way valve body (13), wherein an axial bore is provided in communication with said longitudinal duct (16) in said two-way valve body downsteam of said first obturator (19) and presenting on the free end a connection (15) for fixing a syringe needle; a switching valve (23) connected to said two-way valve body (13) and having a body (24) in which a longitudinal duct (25) is provided, connected at a first side with said transversal duct (17) of said two-way valve body and at the second side with one of axial bores of said fittings (32) for tubes; two flexible tubes (33) having first ends connected to relevant ones among said fittings for tubes; and a handgrip (9) for grasping said syringe by one hand.

2. A syringe according to claim 1 wherein the lower end of said stem (5) is articulated to said piston (2).

3. A syringe according to claims 1 and 2, wherein said first (19) and second (20) obturator in said longitudinal (16) duct and said transversal (17) duct respectively, in said two-way valve body (13) consist of ball obturators.

4. A syringe according to any of the claims from 1 to 3 wherein said first (21) and second (22) spring means capable of constantly urging said first and second obturator (19, 20) in the closing position of said longitudinal duct (16) and said transversal duct (17) respectively, in said two-way valve body (13) consist of helicoidal springs.

5. A syringe according to any of the preceding claims wherein said obturator (28) in said longitudinal duct (25) of said switching valve consist of a slide obturator having its enlarged terminal portions connected to an intermediate rod-shaped portion and being provided with push-buttons (31).

6. A syringe according to any of the preceding claims wherein said handgrip (9) comprises a central body, integral to the upper perimetral portion of said reservoir (1), provided on one side with an annular element (10) and on the opposite side with an elongated grip element (11).

## Patentansprüche

1. Spritze zum Spülen von Zahnwurzelkanälen, die folgendes aufweist:
ein Reservoir (1), um eine zu injizierende Flüssigkeit aufzunehmen;
einen Kolben (2), der fähig ist, im Inneren des Reservoirs dicht zu gleiten;
einen Schaft (5), der ein Ende hat, das mit dem Kolben verbunden ist, während sein entgegengesetztes Ende an einem Betätigungsgriff (6) befestigt ist;
einen rohrförmigen Mantel (7), dessen oberes Ende mit dem Betätigungsgriff verbunden ist und in dem der obere Bereich des Schafts konzentrisch aufgenommen ist;
eine rohrförmige Führung (8), deren unteres Ende an dem oberen Ende des Reservoirs angebracht ist, um den Schaft (5) und den rohrförmigen Mantel (7) gleitend zu führen;
eine Schraubenfeder (12), um den Schaft (5) nach oben zu drängen, um den Kolbnen (2) aus der unteren Position in die angehobene Position im Inneren des Reservoirs (1) zurückkehren zu lassen;
einen Zweiwegeventilkörper (13), der mit dem Boden des Reservoirs verbunden ist und in dessen Körper ein Längskanal (16) vorgesehen ist, dessen oberes Ende in Verbindung mit dem Reservoir (1) steht und dessen unteres Ende mit einem ersten Verschlußelement (19) versehen ist, das durch eine erste Federeinrichtung (21) ständig in die Schließposition gedrängt wird, und mit einem Querkanal (17), der ein Ende hat, das in den Längskanal (16) mündet und mit einem zweiten Verschlußelement (20) versehen ist, das durch eine zweite Federeinrichtung (22) ständig in die Schließposition gedrängt wird;
ein Ansatzelement (14), das von dem unteren Ende des Zweiwegeventilkörpers (13) ausgeht, wobei eine Axialbohrung in Verbindung mit dem Längskanal (16) in dem Zweiwegeventilkörper an der stromabwärtigen Seite des ersten Verschlußelements (19) vorgesehen ist und am freien Ende einen Anschluß (15) zum Anbringen einer Injektionsnadel besitzt;
ein Schaltventil (23), das mit dem Zweiwegeventilkörper (13) verbunden ist und einen Körper (24) hat, in dem ein Längskanal (25) vorgesehen ist, der an einer ersten Seite mit dem Querkanal (17) des Zweiwegeventilkörpers und an der zweiten Seite mit einer der Axialbohrungen von Verbindungseinrichtungen (32) für Schläuche verbunden ist;
zwei flexible Schläuche (33), deren erste Enden mit jeweils relevanten der Verbindungseinrichtungen für Schläuche verbunden sind; und
einen Handgriff ((9), um die Spritze mit einer Hand zu greifen.

2. Spritze nach Anspruch 1,
wobei das untere Ende des Schafts (5) an dem Kolben (2) angelenkt ist.

3. Spritze nach Ansprüche 1 und 2,
wobei das erste (19) und das zweite Verschlußelement (20) in dem Längskanal (16) bzw. dem Querkanal (17) in dem Zweiwegeventilkörper (13) aus Kugelverschlüssen bestehen.

4. Spritze nach einem der Ansprüche 1 bis 3,
wobei die erste (21) und die zweite Federeinrichtung (22) in dem Zweiwegeventilkörper (13), die fähig sind, das erste und das zweite Verschlußelement (19, 20) ständig in die Schließposition des Längskanals (16) bzw. des Querkanals (17) zu drängen, aus schraubenförmigen Federn bestehen.

5. Spritze nach einem der vorhergehenden Ansprüche,
wobei das Verschlußelement (28) in dem Längskanals (25) des Schaltventils aus einem Gleitverschlußelement besteht, dessen vergrößerte Endbereiche mit einem dazwischenliegenden stabförmigen Bereich verbunden und mit Druckknöpfen (31) versehen ist.

6. Spritze nach einem der vorhergehenden Ansprüche,
wobei das Handgriff (9) einen zentralen Körper aufweist, der mit dem oberen Umfangsbereich des Reservoirs (1) integral ausgebildet und auf der einen Seite mit einem ringförmigen Element (10) und auf der entgegengesetzten Seite mit einem langgestreckten Griffelement (11) versehen ist.

## Revendications

1. Seringue pour le lavage des canaux de racines de dents, comprenant : un réservoir (1) pour contenir un liquide à injecter ; un piston (2) qui peut coulisser de façon étanche à l'intérieur dudit réservoir ; une tige (5) ayant une extrémité reliée audit piston tandis que l'extrémité opposée est fixée à une poignée de manoeuvre (6) ; une gaine tubulaire (7), dont l'extrémité supérieure est reliée à ladite poignée de manoeuvre et dans laquelle la partie supérieure de ladite tige est logée concentriquement ; un guide tubulaire (8), dont l'extrémité inférieure est fixée à l'extrémité supérieure dudit réservoir, pour guider de façon coulissante ladite tige (5) et ladite gaine tubulaire (7) ; un ressort hélicoïdal (12) pour pousser vers le haut ladite tige (5) de manière à ramener ledit piston (2) de la position basse à la position haute à l'intérieur dudit réservoir (1) ; un corps de vanne à deux voies (13) raccordé à la base dudit réservoir, ce corps comportant un conduit longitudinal, (16) dont l'extrémité supérieure est en communication avec ledit réservoir (1) et dont l'extrémité inférieure est pourvue d'un premier obturateur (19) constamment rappelé à la position de fermeture par un premier élément élastique (21), et un conduit transversal (17) dont une extrémité débouche dans ledit conduit longitudinal (16) et qui est pourvu d'un deuxième obturateur (20) constamment rappelé à la position de fermeture par un deuxième élément élastique (22); un élément de prolongement (14), s'étendant à partir de l'extrémité inférieure dudit corps de vanne à deux voies (13), dans lequel est prévu un passage intérieur axial en communication avec ledit conduit longitudinal (16) dudit corps de vanne à deux voies en aval dudit premier obturateur (19) et qui comporte sur l'extrémité libre une connexion (15) pour la fixation d'une aiguille de seringue ; une vanne de commutation (23) connectée audit corps de vanne à deux voies (13) et ayant un corps (24) dans lequel un conduit longitudinal (25) est prévu et communique, d'un premier côté, avec ledit conduit transversal (17) dudit corps de vanne à deux voies et, du deuxième côté, avec un des trous axiaux de raccords (32) pour des tubes ; deux tubes flexibles (33) ayant des premières extrémités connectées à des raccords correspondants parmi lesdits raccords pour tubes ; et une poignée de prise (9) pour tenir ladite seringue d'une seule main.

2. Seringue suivant la revendication 1,
dans laquelle l'extrémité inférieure de ladite tige (5) est articulée audit piston (2).

3. Seringue suivant les revendications 1 et 2, dans laquelle lesdits premier (19) et deuxième (20) obturateurs, placés dans ledit conduit longitudinal (16) et ledit conduit transversal (17) respectivement du corps de vanne à deux voies (13), sont des obturateurs à bille.

4. Seringue suivant une quelconque des revendications 1 à 3, dans laquelle lesdits premier (21) et deuxième (22) éléments élastiques, capables de rappeler constamment lesdits premier et deuxième obturateurs (19, 20) à la position de fermeture dudit conduit longitudinal (16) et dudit conduit transversal (17) respectivement dans ledit corps de vanne à deux voies (13),sont des ressorts hélicoïdaux.

5. Seringue suivant une quelconque des revendications précédentes, dans laquelle ledit obturateur (28) dudit conduit longitudinal (25) de ladite vanne de commutation est un obturateur coulissant dont les parties terminales plus grosses sont connectées à une partie intermédiaire en forme de tige et comportant des boutons-poussoirs (31).

6. Seringue suivant une quelconque des revendications précédentes, dans laquelle ladite poignée de prise (9) comprend un corps central, solidaire de la partie périphérique supérieure dudit réservoir (1), comportant d'un côté un élément annulaire (10) et, du côté opposé, un élément de préhension allongé (11).
